# EUROPEAN PATENT SPECIFICATION

(11) **EP 1 308 721 B1**
(45) Date of publication and mention of the grant of the patent: **26.07.2006**
(21) Application number: 01204185.1
(22) Date of filing: 02.11.2001
(51) Int. Cl.: G01N 27/72

(54) **Device and method for detecting magnetic properties of a metal object**
Verfahren und Vorrichtung zur Erfassung magnetischer Eigenschaften metallischer Gegenstände
Procédé et appareil de détection de propriétés magnétiques d'objets métalliques

(43) Date of publication of application: 07.05.2003
(73) Proprietor: Corus Technology BV, 1970 CA Ijmuiden (NL)
(72) Inventor: Johnstone, Sherri, Co Durham DL5 7QG (GB); Gleijm, Gerardus, 1971 KK IJmuiden (NL)
(74) Representative: Hansen, Willem Joseph Maria

(56) References cited:
- EP-A- 0 096 078
- DE-A- 19 962 184
- FR-A- 2 417 102
- GB-A- 936 015
- GB-A- 2 071 331
- US-A- 4 686 471
- US-A- 5 847 563

## Description

The invention relates to a device for detecting magnetic properties of a metal object, in particular for detecting phase transformation of a hot rolled metal strip, comprising generating means for generating a magnetic field intersecting a measurement plane in which measurement plane the metal object under investigation is to be located, and detecting means for detecting a portion of the magnetic field and producing a detection signal in relation to the portion of the magnetic field, and means for processing the detection signal.

In the context of this patent application, metal object is to be understood to comprise metal strip and metal bar. Metal strip is to be understood to comprise metal plate or metal sheet. The typical thickness range of steel strip is understood to be 0.8 to 25 mm.

When hot steel strip leaves a finishing hot rolling stand in a hot rolling mill, the steel strip may be in the hot austenite phase. As it cools, the phase transforms to ferrite based phases such as pearlite, bainite, or martensite phases, depending on the cooling rate and composition of the steel. Austenite is paramagnetic at all temperatures, while ferrite is paramagnetic above the Curie temperature and ferromagnetic below the Curie temperature. Therefore, as the austenite phase transforms to ferrite below the Curie temperature, the fraction of austenite and ferrite present in the steel strip can be detected by measuring the magnetic permeability of the steel. Thus, the magnetic properties of the steel strip can be related to the fraction of phase transformation. More details are disclosed in, for example, European patent application published under number EP 0 177 626 A1.

A device for detecting magnetic properties of a metal strip is known from EP 0 177 626 A1. The known device comprises an exciting coil for generating an alternating magnetic field by feeding alternating current through the coil. The exciting coil is arranged on one side of a steel strip when the strip is in a measuring position. Two detecting coils are arranged in the vicinity of the steel strip, at positions different in distance from the exciting coil. The detecting coils are each induced with the alternating magnetic field of the exciting coil, resulting in individual detection signals. When the steel strip is in its measuring position, part of the alternating magnetic field that induces the detecting coils has passed through the steel strip. The induced signals are analysed and processed using an arithmetic unit.

In practice, the known device is said to be used for on-line detection of a transformation value. When used in an industrial hot mill, it is highly desirable to protect the device from external influences such as dust, magnetisable dust, and water vapour.

It is a drawback of the known device, that only electrically insulating materials, such as ceramic materials, can be used to shield the device from the metal object to be investigated. Most of these materials are unsuitable for usage in an industrial hot mill, because they are fragile and often they are not sufficiently impermeable for water vapour.

Patent application FR-7804805 discloses a device for detecting magnetic properties of a metal object, the device comprising a brass shield disposed between means for generating a continuous magnetic field and means for detecting variation in the magnetic field on one hand, and the metal object on the other. The shield is for protecting the measuring device from the heat coming from the object and is part of an encasement surrounding the device. The distance between the device and the metal object is not measured. Patent application GB-2071331 discloses a device for detecting a magnetic property of an elongated object, the device comprising a cylindrical magnet. The magnetic property and the cross sectional area of the elongated object are measured by magnetic field sensors disposed along the object.

It is an object of the invention to provide a device for detecting magnetic properties of a metal object, which overcomes said drawbacks.

It is yet another object of the invention to provide a device of the above-mentioned type, that is suitable for use in a heavy industrial environment, in particular in conjunction with a hot rolling mill.

It is yet another object of the invention to provide a device of the above-mentioned type, is advantageous for use for on-line detection of magnetic properties of a metal strip being produced in a hot mill.

According to the invention, one or more of these objects are achieved with a device for detecting magnetic properties of a metal object.

Because of the continuous nature of the magnetic field, no eddy currents result in conducting materials on which the magnetic field is incident. The device according to the invention can therefore be shielded using a metal shield, in particular using a non-magnetisable metallic shield. Examples of metals that can now be used for shielding are stainless steel and aluminium.

The metal shield is placed between the device and the metal object under investigation, i.e. between the generating means and the measurement plane, because the continuous magnetic field may penetrate though the entire thickness of the shield. Therefore, the metal shield can be of advantage also as supporting means for supporting the metal object during investigation, including holding the metal object in the measurement plane.

An additional advantage of the invention is that the continuous magnetic field penetrates through the entire thickness of hot rolled products. Even for thick metal objects under investigation, the detection signal is therefore conveniently independent of skin depth, which renders the detection signals less complicated to analyse and obtain meaningful information.

The detecting means should be capable of detecting the continuous magnetic field.

Continuous magnetic field is to be understood in any case to include a magnetic field having a DC-component such as a DC magnetic field or a DC-biased magnetic field that may additionally contain AC-components. Continuous magnetic field may be understood to also include a slowly varying magnetic field, as long as the frequency is low enough to not cause a significant contribution to the detection signal from the metal shield. A maximum allowable frequency may be frequency 15 Hz for metal objects up to several mm thickness gauge. Preferably, the frequency is less than 5 Hz, more preferably it is less than 1 Hz.

It is remarked, that in EP 0 177 626 A1 it is said to be generally known that the skin depth of the magnetic field into the metal object depends upon the frequency of the magnetic field. Nonetheless, this prior art teaches that the frequency of the magnetic field should preferably not be less than 30 Hz.

Several devices or methods can be suitable for detecting the continuous magnetic field. In one preferred embodiment, the detecting means comprises a Hall sensor. Hall sensors are commercially available against negligible cost. Delicate sensors such as Hall sensors are not known to be used in a heavy industrial environment such as an industrial hot rolling mill. Hall sensors can typically withstand a temperature of approximately 150 °C. Thus, the demand for cooling power is not so critical, which makes them suitable for use in a run out table of a hot rolling mill.

The continuous magnetic field generating means can be formed by a permanent magnet. However, it is preferred that continuous magnetic field generating means are switchable. This has the advantage that the magnetic field can be switched off. Magnetic particles that might be attracted to the magnet will then fall off, so that the need for manual cleaning is reduced with respect to a permanent magnet.

A switchable permanent magnet can be used, but a transmitter coil connected to a DC power source, or optionally a DC-biased power source, is found to be more convenient as switchable continuous magnetic field generating means.

The detection of a portion of the magnetic field by the detection means depends not only on properties of the metal object that is investigated, but also on the distance between the metal object and the device, which is referred to as the lift off distance. In a hot rolling mill, the lift off distance may even fluctuate, due to bends and waves in the metal strip being hot rolled. To take into account the effect of the lift off distance, the detecting means comprise two units, each placed at a position different in distance from the continuous magnetic field generating means. Having at least two such units, a simultaneous measurement of both the magnetic properties and the lift off distance is possible, since two independent detection signals are provided from which the means for processing the signal can extract two unknown entities, i.e. the magnetic property of the metal object and the lift off distance. Therefore, a separate unit for monitoring the lift off distance is not needed.

The invention can be used in a process producing hot-rolled steel strip with a certain desired fraction of ferrite and austenite phases, wherein a slab is hot rolled at a temperature where the austenite phase forms, to produce an intermediate steel strip, and wherein the intermediate steel strip is subsequently cooled to a temperature below the Curie temperature and whereby the austenite phase transforms into the ferrite phase, during which cooling the amount of transformation is monitored.

The process is characterised by monitoring the amount of transformation using the device according to the invention.

The information that is obtained by this process, by processing the detection signal, can be utilised for improved process control. This is advantageous since the transformation state is of influence on the strength of the hot rolled product. Also, a higher homogeneity and reproducibility of the mechanical properties of the hot rolled product is achieved.

The result of the monitoring can be used as a basis for feedback information to regulate the cooling power. Herewith, more control is achieved over the quality of the obtained hot rolled product.

In yet another aspect, the invention relates to a hot rolling mill for hot rolling of metal strip, comprising at least a finishing hot rolling stand and a trajectory for passing the metal strip through the hot rolling mill.

According to this aspect of the invention, the hot rolling mill is characterised in that the device of the invention is provided in the vicinity of the trajectory, for on-line detecting the magnetic properties of the metal strip.

In an embodiment, the means for processing the detection signal is provided with output means to produce a feedback signal, which output means is connected to regulation means for regulating the hot rolling mill.

The invention will now be illustrated with reference to the drawing wherein
FIG. 1 is a schematic view of an embodiment of the device not according to the invention;
FIG. 2 is a schematic view of another embodiment of the device not according to the invention;
FIG. 3 is a schematic view of an embodiment of the device according to the invention;
FIG. 4 is a diagram showing the effect of the lift off distance on the detection signals;
FIG. 5 is a schematic view of a hot rolling mill provided with the device according to the invention; and
FIG. 6 is a diagram showing a signal from the device according to FIG. 1 as a function of time during cooling down of a steel strip.

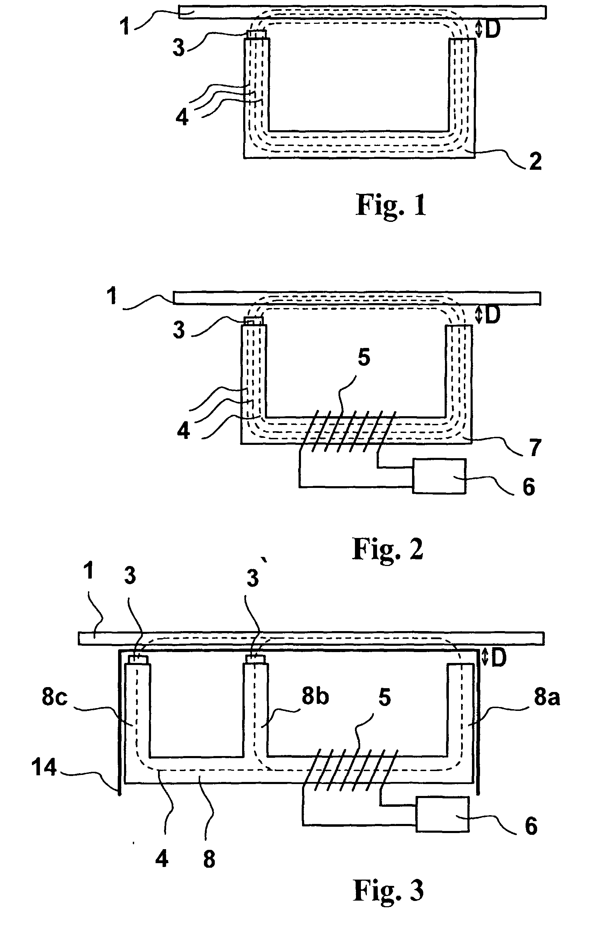

FIG. 1 shows a device for detecting magnetic properties of a metal object 1 not according to the present invention. This embodiment is based on a permanent magnet 2. At least one of the poles is provided with a Hall sensor 3. Both poles are equally well suited. In fact the Hall sensor does not even have to be located on a pole, as long as it is picking up magnetic flux. Means (not shown) is provided for processing the signal that is produced by the Hall sensor 3. During operation, the magnetic poles of magnet 2 are aimed at the metal object 1 under investigation.

The resulting magnetic field lines 4 at least in part pass through the metal object 1. The magnetic field that passes through the Hall sensor 3 thus depends on the magnetic permeability of the metal object 1. The Hall sensor 3 responds to the incident magnetic field with a detection signal, which is a voltage signal that is proportional to the incident magnetic field.

The magnetic permeability of a paramagnetic metal is 1, and that of a ferromagnetic metal is higher than one. Thus, the higher the fraction of the metal that is in a ferromagnetic state, the higher the permeability of the metal object as a whole. This affects the magnetic field that is incident on the Hall sensor 3, and consequently, the produced detection signal. The magnetic field on the Hall sensor is higher if the fraction of ferromagnetic material in the metal object is higher.

The magnetic field that is incident on the Hall sensor, is also dependent on the distance D between the magnetic poles and the metal object (often referred to as the lift off distance), as well as on the thickness of the metal object. Additional devices may be used to measure D and/or the metal object thickness gauge in concurrence. The means for processing the detection signal can be provided with input means for receiving a lift off signal and/or a thickness signal, and means for using one or both of these signals in processing the detection signal.

FIG. 2 shows an embodiment not according to the present invention similar to that of FIG. 1, whereby the permanent magnet is replaced by a magnetisable core 7 having coil 5 wound around it. The coil is connected to a DC power supply 6, which typically delivers an electric current. The U-shape of the core contributes to the detection efficiency of the Hall sensor 3, which is placed on a leg of the U-shaped core. The core can consist, of for instance, iron or transformer steel.

Optionally, the coil may be connected to a DC-biased current. In this case, the detection signal could for example be filtered to separate the DC-component from unwanted AC-contributions in the signal.

FIG. 3 shows an embodiment of the invention. It has a forked core 8, with a generating leg 8a two receiving legs 8b and 8c. One of the receiving legs (8c) is located at a longer distance from the generating leg 8a than the other receiving leg (8b). The coil 5 is wound on the generating leg 8a or in a section between the generating leg and the nearest receiving leg 8b. The coil is connected to a DC power supply 6. Both receiver legs are provided with detection means (3,3'), each providing mutually independent detection signals.

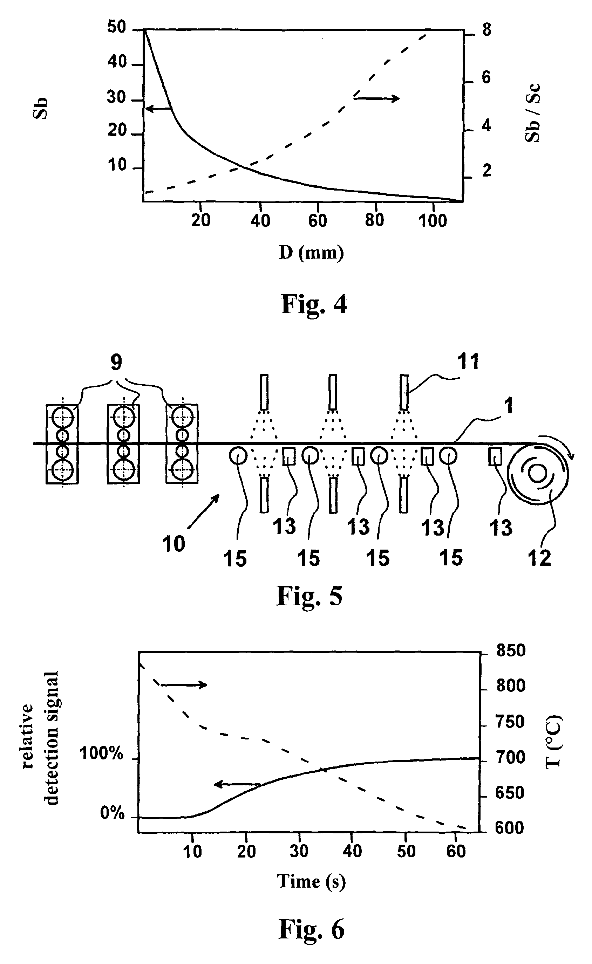

With the embodiment of FIG. 3, both the magnetic properties of the metal object, and the lift off distance can be determined using the two independent detection signals from detection means 3 and 3'. Details of the procedure are given in EP 0 177 626 A1. An example is given in FIG. 4, where the continuous line represents the Hall sensor signal S_{b} of the first receiving leg 8b (which is the closest to the generating leg 8a) is plotted as a function of lift off distance. The dashed line gives the ratio between the detection signals of the first receiving leg and the second receiving leg. As can be seen, this ratio varies with lift off distance.

It should be noted that the sum of the magnetic field lines passing legs 8b and 8c should theoretically add up to the field lines passing through leg 8a. Therefore, the embodiment as shown in FIG. 3, can be used equally well when one of the detection means 3 or 3' is located on the generating leg 8a instead of a receiving leg. The flux on the pole having no detection means can then be determined by subtraction of the two detection signals.

Also shown in FIG. 3 is the metallic protective shield 14, which is located in the magnetic field 4 between the poles of the magnet 8 and the metal object 1 that is under investigation. The shield may be part of an encasement of the device.

FIG. 5 shows a schematic view of a steel hot rolling mill. It comprises hot rolling stands 9 to hot roll a metal slab into a metal strip 1. Following a finishing hot rolling stand, there is provided a run out table 10, which can be provided with an accelerated cooling section having water cooling units 11 for accelerated cooling. The run out table comprises rollers 15 for supporting the strip 1. A coiler 12 can be provided for coiling the cooled metal strip or sheet 1. The device 13 for detecting magnetic properties of the metal strip is arranged in the vicinity of the trajectory of the metal strip 1. The device 13 can be arranged after the last water-cooling unit, or within the accelerated cooling section, or both.

As the hot steel strip leaves the finishing hot rolling stand in the hot rolling mill, the steel strip may be in the hot austenite phase. As it cools, the phase transforms to ferrite based phases such as pearlite, bainite, or martensite phases, depending on the cooling rate. Austenite is paramagnetic at all temperatures, while ferrite is paramagnetic above the Curie temperature and ferromagnetic below the Curie temperature. Therefore, as the austenite phase transforms to ferrite below the Curie temperature, the fraction of austenite and ferrite present in the steel strip can be detected by the device according to the invention.

If the rollers 15 are spaced relatively far apart from each other, the metal strip can vibrate significantly and thus result in varying lift off distance. With the invention, it is possible to provide a metallic support between the device 13 and the metal strip 1.

To demonstrate the device, a steel strip of 1.9 mm thickness gauge and alloyed with 1.35 wt.% Mn and 0.14 wt.% C, was heated up to 900°C, and subsequently cooled by natural air cooling. The Curie point of this steel is thought to be at about 768°C. FIG. 6 shows, as a function of time, the average temperature of the strip (dashed line) and the Hall sensor signal (continuous line).

As can be seen in FIG. 6, the temperature over all decreases with time, and also the Hall sensor signal changes gradually with time. The Hall signal changes in a smooth S-curve. Around t = 25 s, the effect of heat release due to the transformation from austenite to ferrite can be seen on the temperature. The temperature may even temporarily increase due to said heat release. This coincides with the highest rate of change in the Hall sensor signal. This shows that temperature is not unambiguously related to the transformation fraction of the metal strip.

The transformation fraction is, at least in good approximation, linear with the Hall sensor signal, because the skin depth of the continuous magnetic field is constant and much larger than the thickness gauge of the steel strip. For reference, it is remarked that would a magnetic field be used that was generated in a coil excited with a 50 Hz current, the skin depth would have changed from 10 mm to 3 mm during the transformation. Even with a 1.9 mm thickness gauge, that would have resulted in a significant deviation from the linear relation between the detection signal and the transformation fraction. The device according to the invention can thus be advantageously used to monitor the transformation fraction of the steel strip.

The invention has been set out mainly in conjunction with use of the device in a hot rolling mill. While this indicates particular suitability of the instrument for use in such an environment, it will be appreciated by the person skilled in the art, that the device can also be used advantageously in other environments.

## Claims

1. Device for detecting a magnetic property of a metal object (1), comprising generating means (5, 8) for generating a magnetic field intersecting a measurement plane in which measurement plane the metal object (1) under investigation is to be located, and detecting means (3, 3') for detecting a portion of the magnetic field and producing a detection signal in relation to the portion of the magnetic field, and means for processing the detection signal to extract said magnetic property, wherein the generating means (5, 6, 8) are continuous magnetic field generating means, and the detecting means (3, 3') are means suitable for detecting at least a continuous component of the magnetic field, there being a non-magnetisable metallic shield (14) located between the device and said measurement plane, **characterised in that** the detecting means comprise two detecting units (3, 3'), placed at respective positions which are different relative to the continuous magnetic field generating means and are spaced along said measurement plane, to provide two independent detection signals, and said means for processing the detection signals extracts both said magnetic property and the distance between the metal object and the device, and **in that** a single non-magnetisable metallic shield (14), which is part of an encasement of the device, is located in the magnetic field between, on the one hand, said magnetic field generating means (5, 8) and said two detecting units (3, 3') and, on the other hand, said measurement plane.

2. Device according to claim 1, wherein each said detecting unit (3, 3') comprises a Hall sensor, the two Hall sensors being mounted on respective legs (8b, 8c) of a core (8) of said field generating means, said legs (8b, 8c) projecting towards said measurement plane and said Hall sensors being on the ends of the legs (8b, 8c) facing the measurement plane.

3. Device according to claim 1 or 2, wherein the continuous magnetic field generating means comprises a transmitter coil (5) connected to a DC power source (6).

4. Device according to any one of the preceding claims, wherein the means for processing the detection signal comprises input means for receiving a thickness signal that contains independent thickness information of the metal object and means for using the thickness signal in processing the detection signal.

5. Process of producing hot-rolled steel strip with a predetermined fraction of ferrite and austenite phases, wherein a slab is hot rolled at a temperature where the austenite phase forms, to produce an intermediate steel strip, and wherein the intermediate steel strip is subsequently cooled to a temperature whereby the austenite phase transforms into the ferrite phase, during which cooling the amount of transformation is monitored, wherein the monitoring of the amount of transformation is performed using the device according to any one of claims 1 to 4.

6. Hot rolling mill for hot rolling of metal strip, comprising at least a finishing hot rolling stand and a trajectory for passing the metal strip through the hot rolling mill, wherein a device according to any one of the claims 1 to 4 is provided in the vicinity of the trajectory, for on-line detecting the magnetic properties of the metal strip.

## Patentansprüche

1. Vorrichtung zur Erfassung einer magnetischen Eigenschaft eines metallischen Gegenstands (1), umfassend Erzeugungsmittel (5, 8) zur Erzeugung eines magnetischen Felds, das eine Messebene schneidet, wobei in der Messebene der untersuchte metallische Gegenstand (1) anzuordnen ist, sowie Erfassungsmittel (3, 3') zur Erfassung eines Teils des magnetischen Felds und zur Erzeugung eines Erfassungssignals in Bezug auf den Teil des magnetischen Felds, sowie Mittel zur Verarbeitung des Erfassungssignals, um die magnetische Eigenschaft herauszuziehen, wobei die Erzeugungsmittel (5, 6, 8) Mittel zur kontinuierlichen Magnetfelderzeugung sind, und die Erfassungsmittel (3, 3') Mittel sind, die sich dazu eignen, mindestens einen kontinuierlichen Bestandteil des magnetischen Felds zu erfassen, dort ein nicht magnetisierbares metallisches Schild (14) darstellend, das zwischen der Vorrichtung und der Messebene angeordnet ist, **dadurch gekennzeichnet, dass** die Erfassungsmittel zwei Erfassungseinheiten (3, 3') enthalten, die an in Bezug auf die Mittel zur kontinuierlichen Magnetfelderzeugung unterschiedlichen Positionen angeordnet und entlang der Messebene beabstandet sind, um zwei unabhängige Erfassungssignale zu erzeugen, und die Mittel zur Verarbeitung der Erfassungssignale sowohl die magnetische Eigenschaft als auch den Abstand zwischen dem metallischen Gegenstand und der Vorrichtung herausziehen, und dass ein einzelnes nicht magnetisierbares metallisches Schild (14), das Teil eines Gehäuses der Vorrichtung ist, in dem magnetischen Feld zwischen den Mitteln zur Magnetfelderzeugung (5, 8) auf der einen Seite und den beiden Erfassungseinheiten (3, 3') und der Messebene auf der anderen Seite angeordnet ist.

2. Vorrichtung nach Anspruch 1, wobei jede Erfassungseinheit (3, 3') einen Hallschen Sensor umfasst und die zwei Hallschen Sensoren auf entsprechenden Böcken (8b, 8c) eines Trägerkörpers (8) der Felderzeugungsmittel befestigt sind, wobei die Böcke (8b, 8c) in Richtung auf die Messebene vorstehen und sich die Hallschen Sensoren auf den Enden der Böcke (8b, 8c), der Messebene zugewandt, befinden.

3. Vorrichtung nach Anspruch 1 oder 2, wobei die Mittel zur kontinuierlichen Magnetfelderzeugung eine Geberspule (5), die mit einer Gleichstromquelle (6) verbunden ist, enthalten.

4. Vorrichtung nach einem der vorhergehenden Ansprüche, wobei die Mittel zur Verarbeitung des Erfassungssignals Eingangsmittel zum Empfangen eines Dickensignals umfassen, das unabhängige Dickeninformationen des metallischen Gegenstands sowie Mittel zur Nutzung des Dickensignals bei der Verarbeitung des Erfassungssignals enthält.

5. Verfahren zur Herstellung eines warmgewalzten Stahlbandes mit einem vorbestimmten Anteil an Ferrit- und Austenitphasen, wobei ein Walzbarren bei einer Temperatur warmgewalzt wird, bei der sich die Austenitphase bildet, um ein Stahlband-Zwischenprodukt herzustellen, und wobei das Stahlband-Zwischenprodukt anschließend auf eine Temperatur abgekühlt wird, wodurch sich die Austenitphase in die Ferritphase umwandelt, der Umwandlungsbetrag wird während dieser Abkühlung überwacht, wobei die Überwachung des Umwandlungsbetrags durch die Verwendung der Vorrichtung gemäß einem der Ansprüche 1 bis 4 erfolgt.

6. Warmwalzstraße zum Warmwalzen von Metallbändern, umfassend wenigstens einen Warmwalzständer zur Nachbearbeitung und eine Bahn, um das Metallband durch die Warmwalzstraße zu befördern, wobei eine Vorrichtung gemäß einem der Ansprüche 1 bis 4 in der Nähe der Bahn vorgesehen ist, um die magnetischen Eigenschaften des Metallbandes online zu erfassen.

## Revendications

1. Dispositif de détection d'une propriété magnétique d'un objet métallique (1), comprenant un moyen générateur (5, 8) permettant de produire un champ magnétique coupant un plan de mesure, plan de mesure dans lequel se trouve l'objet métallique (1) recherché, et un moyen de détection (3, 3') permettant de détecter une partie du champ magnétique et de produire un signal de détection en relation avec la portion du champ magnétique, et un moyen de traitement du signal de détection permettant d'extraire ladite propriété magnétique, dans lequel le moyen générateur (5, 6, 8) est un moyen générateur de champ magnétique continu, et dans lequel le moyen de détection (3, 3') est un moyen approprié pour détecter au moins une composante continue du champ magnétique, un écran métallique non magnétisable (14) se trouvant entre le dispositif et ledit plan de mesure, **caractérisé en ce que** le moyen de détection comprend deux unités de détection (3, 3'), placées en des positions respectives différentes par rapport au moyen de production de champ magnétique continu, et espacées le long dudit plan de mesure, afin d'obtenir deux signaux indépendants de détection, **en ce que** ledit moyen de traitement des signaux de détection extrait à la fois ladite propriété magnétique et la distance séparant l'objet métallique du dispositif, et **en ce qu'**un écran métallique simple non magnétisable (14), lequel fait partie d'un logement du dispositif, se trouve dans le champ magnétique présent entre ledit moyen générateur (5, 8) de champ magnétique et lesdites deux unités de détection (3, 3') d'une part, et ledit plan de mesure d'autre part.

2. Dispositif selon la revendication 1, dans lequel chaque unité de détection (3,3') comprend un détecteur d'effet Hall, les deux détecteurs d'effet Hall étant montés sur des pattes respectives (8b, 8c) d'un noyau (8) dudit moyen générateur de champ, lesdites pattes (8b, 8c) faisant saillie vers ledit plan de mesure et lesdits détecteurs d'effet Hall se trouvant aux extrémités des pattes (8b, 8c) qui font face au plan de mesure.

3. Dispositif selon la revendication 1 ou 2, dans lequel le moyen générateur de champ magnétique continu comprend une bobine émettrice (5) reliée à une source d'alimentation continue (6).

4. Dispositif selon l'une quelconque des revendications précédentes, dans lequel le moyen de traitement du signal de détection comprend un moyen d'entrée permettant de recevoir un signal d'épaisseur qui contient des informations indépendantes relatives à l'épaisseur de l'objet métallique, et un moyen permettant d'utiliser le signal d'épaisseur lors du traitement du signal de détection.

5. Procédé de production d'une bande d'acier laminée à chaud comportant une fraction prédéterminée de phases ferrite et austénite, **caractérisé en ce qu'**une plaque est laminée à chaud à une température où se forme la phase d'austénite, afin de produire une bande d'acier intermédiaire, **caractérisé en ce que** la bande intermédiaire d'acier est ensuite refroidie à une température à laquelle la phase d'austénite se transforme en phase ferrite, refroidissement au cours duquel l'ampleur de la transformation est suivie, et **caractérisé** et ce que le suivi de l'ampleur de la transformation se produit grâce au dispositif conforme à l'une quelconque des revendications 1 à 4.

6. Laminoir de laminage à chaud permettant de laminer à chaud une bande métallique, comprenant au moins un montant de cage de laminoir et une trajectoire permettant de faire passer la bande métallique à travers le laminoir de laminage à chaud, dans lequel un dispositif conforme à l'une quelconque des revendications 1 à 4 se trouve au voisinage de la trajectoire, afin de détecter les propriétés magnétiques de la bande métallique sur la ligne de fabrication.
